# EUROPÄISCHE PATENTANMELDUNG

(11) **EP 1 746 511 A2**
(43) Veröffentlichungstag der Anmeldung: **24.01.2007**
(21) Anmeldenummer: 06013192.7
(22) Anmeldetag: 27.06.2006
(51) Int. Cl.: G06F 12/02

(54) **Verfahren zur Speicherverwaltung bei der Ausführung einer Anwendung durch einen tragbaren Datenträger**

(30) Priorität: 11.07.2005 DE 102005032313
(71) Anmelder: Giesecke & Devrient GmbH, 81677 München (DE)
(72) Erfinder: Borgs, Hans, 83607 Holzkirchen (DE)

(57) **Zusammenfassung**

Vorgeschlagen wird ein Verfahren zur Steigerung der Leistungsfähigkeit eines ressourcenbeschränkten, tragbaren Datenträgers durch adaptive Verbesserung der Speicherverwaltung bei der Ausführung von Anwendungen. Dazu wird die Aufteilung des schnellen, flüchtigen Speichers (34) auf Ausführungspuffer (44) und Anwendungscode (46) variabel gestaltet, und erst bei der wiederholten Ausführung von Anwendungsprogrammcode optimal eingestellt. Für das Einstellen wird bei der Ausführung einer Anwendung der benötigte Zeitbedarf (T) in Abhängigkeit von der Größe des bereitgestellten Pufferspeichers (44) bestimmt und die Größe des Pufferspeichers (44) anschließend jeweils variiert, bis die kürzestmögliche Ausführungszeit erreicht ist.

## Beschreibung

Die Erfindung betrifft allgemein das Gebiet der Speicherverwaltung auf einem tragbaren Datenträger und im besonderen eine effiziente Nutzung von dessen begrenzten Ressourcen, so daß die Leistungsfähigkeit eines tragbaren Datenträgers bei der Durchführung einer Anwendung optimiert wird. Unter tragbaren Datenträgern werden dabei insbesondere Chipkarten im Kreditkarten- oder SIM-Karten-Format (Smart Card) verstanden. Jedoch ist die Erfindung auch auf andere Bauformen tragbarer Datenträger übertragbar, in denen ressourcenbeschränkte Mikrocontroller eingesetzt werden.

Aufbau, Bauformen, Funktion und Anwendungen von tragbaren Datenträgern im Sinne der Erfindung sind in dem "Handbuch der Chipkarten", W. Rankl, W. Effing, 4. Auflage, Hanser Verlag München, 2002 beschrieben. Kap. 3.4 des Buches erläutert den Aufbau von Mikrocontrollern für Chipkarten und geht dabei auch auf eine hardwareunterstützte Speicherverwaltung (memory management unit; MMU) ein. Kap. 5 befaßt sich mit Betriebssystemen für entsprechend Mikrocontroller bzw. für Chipkarten. Ein vor allem unter dem Gesichtspunkt der Sicherheit bewußt in Kauf genommenes systematisches Problem bei Chipkarten - und vergleichbaren tragbaren Datenträgern - ist die durch geometrische Vorgaben bedingte starke Beschränkung der zur Verfügung stehenden Hardwareressourcen. Diese beschränken den Umfang des überhaupt speicherbaren Anwendungsprogrammcodes und beeinträchtigen zugleich die Geschwindigkeit, mit der Anwendungen ausgeführt werden. Direkt verknüpft sind möglicher Codeumfang und Ausführungsgeschwindigkeit über den flüchtigen schnellen RAM-Speicher, in dem ein Pufferspeicher zur Unterstützung einer schnellen Programmausführung einerseits und direkt von einer ausgeführten Anwendung benötigter Speicherplatz andererseits zugeteilt werden müssen. Eine Vergrößerung des Pufferspeichers geht dabei zu Lasten der möglichen Anwendungsprogrammgröße. Insbesondere bei zum Nachladen von Anwendungen geeigneten tragbaren Datenträgern, auf die Anwendungsprogrammcode erst von einem Endabnehmer gebracht wird, sind die Hersteller häufig genötigt, die Datenträger so einzurichten, daß sie möglichst viel Anwendungsprogrammcode aufnehmen können. Aus der Einrichtung zur Aufnahme eines möglichst großen Anwendungsprogrammcodes resultiert eine im Vergleich zur schnellstmöglichen geringe Arbeitsgeschwindigkeit. Wird dann tatsächlich nur ein Anwendungscode mit kleinerem Umfang auf den tragbaren Datenträger gebracht, ist die Arbeitsgeschwindigkeit niedriger als möglich.

Aufgabe der Erfindung ist es, die Leistungsfähigkeit eines tragbaren Datenträgers bei vorgegebenen Hardwareressourcen zu verbessern.

Diese Aufgabe wird gelöst durch ein Verfahren mit den Merkmalen des Hauptanspruchs. Die Aufgabe wird weiterhin gelöst durch eine Speicherverwaltung mit den Merkmalen des Anspruchs 4.

Grundlage der Erfindung ist der Ansatz, die Aufteilung des schnellen flüchtigen Speichers auf Ausführungspuffer und Anwendungscode variabel zu gestalten, so daß sie bei wiederholter Ausführung eines Anwendungsprogrammcodes auf einen tragbaren Datenträger jeweils optimal eingestellt werden kann. Erfindungsgemäß wird dies erreicht, indem bei der Ausführung einer Anwendung der dafür benötigte Zeitbedarf in Abhängigkeit von der Größe des bereitgestellten Pufferspeichers bestimmt und die Größe des Pufferspeichers anschließend variiert wird, bis die kürzestmögliche Ausführungszeit erreicht ist. Die Erfindung hat den Vorteil, daß sie ohne größere Eingriffe in den Mikrocontroller oder das Betriebssystem des tragbaren Datenträgers realisierbar ist. Erfindungsgemäß eingerichtete tragbare Datenträger eignen sich unverändert für dieselben Anwendungen bis zu einem maximalen Codeumfang, wie sie auf üblichen tragbaren Datenträgern einrichtbar sind. Garantiert ist dabei zunächst nur, analog zu üblichen tragbaren Datenträgern, eine vergleichsweise langsame Mindestarbeitsgeschwindigkeit. Diese verbessert sich aber, sofern später nicht ein anderes Programm mit dem maximalen Codeumfang geladen wird, nachträglich auf einen besseren Wert. Alternativ kann zunächst eine höhere Arbeitsgeschwindigkeit bereitgestellt werden, die sich ggf. nachträglich zwar verringert, dann aber den Vorteil bietet, daß auch eine Anwendung mit größerem Codeumfang immer noch ausführbar ist.

Unter Bezugnahme auf die Zeichnung wird ein Ausführungsbeispiel der Erfindung nachfolgend näher erläutert.

Es zeigen:
- Fig. 1: ein Blockdiagramm eines tragbaren Datenträgers mit den Grund-elementen eines Mikrocontrollers und
- Fig. 2: ein Flußdiagramm der Arbeitsweise des tragbaren Datenträgers bei der Ausführung einer Anwendung.

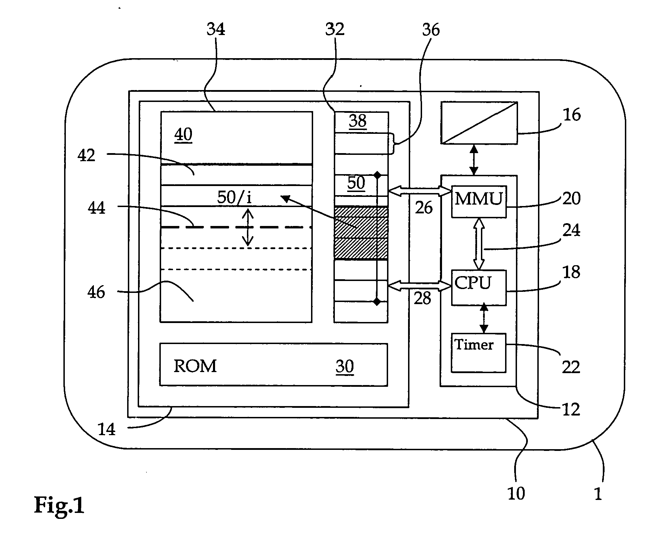

Der in Fig.1 gezeigte tragbare Datenträger 1 weist auf einem einzelnen Halbleiterchip einen Mikrocontroller 10 mit einem Prozessor 12, einem Speicher 14 sowie einer Schnittstellenschaltung 16 zur Durchführung einer kontaktlosen oder kontaktgebundenen Kommunikation mit einem nicht gezeigten externen Terminal auf. Der Prozessor 12 beinhaltet einen Prozessorkern (CPU) 18, eine Speicherverwaltungseinheit (MMU) 20 sowie einen Timer 22. Über einen internen Adreßbus 24, einen externen Adreßbus 26 sowie einen Datenbus 28 kann der Prozessorkern 18 auf den Speicher 14 zugreifen. Die Speicherverwaltungseinheit 20 ist zwischen internem Adreßbus 24 und externem Adreßbus 26 angeordnet und nimmt u.a. bei der Ausführung eines Anwendungsprogrammes die Umsetzung der von dem Prozessorkern 18 über den internen Adreßbus 24 ausgegebenen logischen Adressen in physische Adressen im Speicher 14 vor. Desweiteren steuert die Speicherverwaltungseinheit 20 die Zuteilung von Speicherressourcen zu Anwendungsprogrammen und Prozessorkern 28.

Mit dem tragbaren Datenträger 1 lassen sich im Wechselspiel mit einem externen Terminal typische, vorzugsweise sicherheitskritische Anwendungen ausführen, wie sie etwa in dem eingangs genannten "Handbuch der Chipkarten" beschrieben sind. Mögliche Anwendungen sind beispielsweise eine Geldkartenfunktion oder eine Gesundheitskartenfunktion. Anwendungen bestehen regelmäßig aus einer Folge von Kommandos, die seriell ausgeführt werden, wobei das externe Terminal - nach Auswahl einer Anwendung - dem tragbaren Datenträger 1 über die Schnittstellenschaltung 16 jeweils ein Kommando schickt, das von dem Microcontroller 10 gemäß einem zugehörigen Anwendungsprogramm verarbeitet wird, um einen Antwortdatensatz zu erzeugen, den der tragbare Datenträger 1 an das externe Terminal zurückschickt.

Der Speicher 14 ist in mehrere Speicherfelder unterteilt und enthält einen typischerweise als ROM ausgeführten, nicht veränderbaren Festwertspeicher 30, einen typischerweise als EEPROM ausgeführten, überschreibbaren, nichtflüchtigen Speicher 32 sowie einen schnellen, typischerweise als RAM ausgeführten flüchtigen, überschreibbaren Speicher 34.

Im Festwertspeicher 30 befindet sich Programmcode, der ein Betriebssystem implementiert. Optional kann ein Teil des Betriebssystemprogrammcodes auch im nichtflüchtigen Speicher 32 gespeichert sein. Das Betriebssystem ist von einem proprietären, auf tragbare Datenträger abgestimmten Typ oder eine speziell auf den Einsatz in einem tragbaren Datenträger 1 zugeschnittene Variante eines gängigen Betriebssystems für Großrechner wie LINUX oder JAVA. Weiter können sich im Festwertspeicher 30 Teile des Codes von Anwendungsprogrammen befinden.

Der nichtflüchtige Speicher 32 ist physikalisch in sogenannte Seiten 36 (*pages*) unterteilt und dient zur Aufnahme des Codes von einem oder mehreren Anwendungsprogrammen 50, mittels derer Anwendungen des tragbaren Datenträges 1 realisiert werden. Anwendungsprogrammcode kann prinzipiell zu jeder Zeit in den nichtflüchtigen Speicher 32 gebracht werden. Insbesondere kann das Laden von Anwendungsprogrammcode nachträglich nach Übergabe des tragbaren Datenträgers 1 an einen Endabnehmer erfolgen.

Desweiteren sind im nichtflüchtigen Speicher 32 Konfigurationsinformationen 38 abgelegt, auf die die Speicherverwaltungseinheit 20 bei der Ausführung eines Anwendungsprogrammes 50 zugreift, um die Größe der Segmente 42 und 44 im flüchtigen Speicher einzustellen. Als Konfigurationsinformation gespeichert ist ein Wert T_{R}, der einen Referenzwert für die zur Ausführung eines Kommandos benötigte Zeit angibt. Der Wert T_{R} ist im Urzustand, d.h. bis zur erstmaligen Ausführung einer Anwendung, gesetzt und wird anschließend vom Timer 22 geliefert. Für unterschiedliche Kommandos können unterschiedliche T_{R} Werte gespeichert sein. Um eine mögliche Extremwerteigenschaft von T_{R} feststellen zu können, sind ferner Werte Tv gespeichert, die von dem Timer 22 bei der Ausführung vorhergehender Kommandos gewonnen wurden. Weiter ist als Konfigurationsinformation ein Wert Z gespeichert, der ein Maß für die Größe des im flüchtigen Speicher 34 einzurichtenden, als Puffer dienenden Segmentes 42 liefert.

Bei der Ausführung einer Anwendung wird der flüchtige Speicher 34 durch die Speicherverwaltungseinheit 20 in Segmente gegliedert. Ein erstes Segment 40 dient dabei zur Aufnahme von systembezogenen Daten, die im Rahmen des Betriebes des Prozessors 12 anfallen. Die Größe des ersten Segmentes 40 ist an das Betriebssystem angepaßt und praktisch fest eingestellt. Ein zweites Segment 42 fungiert als schneller Pufferspeicher (*Cache*) und unterstützt die Ausführung des jeweils ausgeführten Anwendungsprogrammes 50. Die Größe des zweiten Segmentes 42 ist variabel und wird jeweils durch die Speicherverwaltungseinheit 20 festgelegt. Zur Beschleunigung der Ausführung einer Anwendung wird im zweiten Segment 42 jeweils ein stark frequentierter Teil 50/i des Codes des ausgeführten Anwendungsprogrammes 50 nachgebildet. Zweckmäßig werden dabei aus dem nichtflüchtigen Speicher 32 diejenigen Seiten 36 in das Segment 42 kopiert, auf die im Rahmen der Ausführung die meisten Zugriffe erfolgen. Datenänderungen aufgrund der Ausführung des Anwendungsprogrammes 50 werden dann, soweit dies möglich ist, in dem im Segment 42 nachgebildeten Teil 50/i des Anwendungsprogrammes vorgenommen. Der Inhalt des Segmentes 50/i wird regelmäßig oder zu bestimmten Zeitpunkten gesammelt auf den nichtflüchtigen Speicher 32 zurückübertragen (*flush*). Die Variabilität des Segmentes 42 ist in Fig.1 durch die dickgestrichene Randlinie 44 symbolisiert. Das dritte Segment 46 des flüchtigen Speichers 34 ist den Anwendungsprogrammen direkt zugeordnet und stellt Speicherplatz bereit, der von einem jeweils ausgeführten Anwendungsprogramm unmittelbar angefordert wird. Die im dritten Segment 46 gespeicherten Daten werden typischerweise durch die Befehle COD (clear on deselect) oder COR (clear on reset) gelöscht.

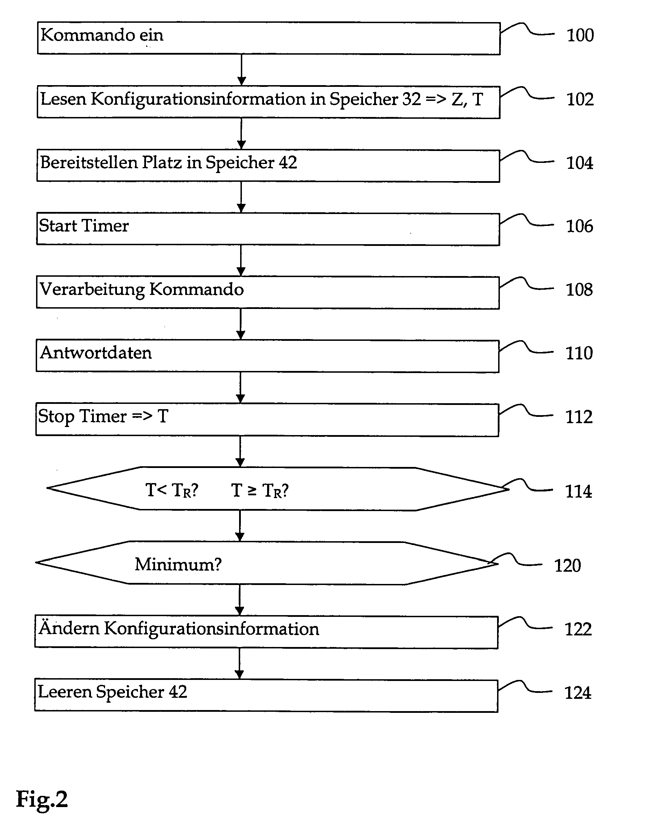

Die verschiebbare Randlinie 44 zwischen dem zweiten Segment 42 und dem dritten Segment 46 wird von der Speicherverwaltungseinheit 20 so eingestellt, daß das Segment 42 bei schnellstmöglicher Ausführungszeit für die Ausführung eines Anwendungsprogrammes 50 die kleinstmögliche Größe besitzt. Zur Vornahme dieser Einstellung führt der Prozessor 18 eine Folge von Programmschritten aus, die in Fig. 2 veranschaulicht ist.

Die Schrittfolge setzt mit dem Eingang eines Kommandos über die Schnittstellenschaltung 16 im Rahmen der Ausführung einer Anwendung ein, Schritt 100. Der Prozessor 12 liest daraufhin die Konfigurationsinformation 38 im nichtflüchtigen Speicher 32 aus und erhält einen Wert Z als Maß für die Größe des im flüchtigen Speicher 34 einzurichtenden Pufferspeichersegmentes 42, sowie einen Wert T_{R} als Referenzwert für die zur Ausführung des Kommandos benötigte Zeit.

Der Wert Z entspricht beispielsweise unmittelbar einer Anzahl von Seiten 36 des nichtflüchtigen Speichers 32, die im flüchtigen Speicher 34 entsprechend zur Unterstützung der Kommandoausführung bereitzustellen sind. Gemäß dem Wert für Z dimensioniert die Speicherverwaltungseinheit 20 im flüchtigen Speicher 34 die Größe des als Puffer dienenden Speichersegmentes 42 und legt die Grenze 44 entsprechend, Schritt 104.

Anschließend veranlaßt der Prozessor 12 den Start des Timers 22, Schritt 106. Der Timer erfaßt nachfolgend die bis zum Abschluß der Kommandoverarbeitung verstreichende Zeit. Sodann verarbeitet der Prozessor 12 das Kommando, Schritt 108. Die Kommandoverarbeitung erfolgt unter Zugriff auf die zugehörigen Teile des Anwendungsprogrammcodes 50 im flüchtigen Speicher 32 sowie auf das dem Anwendungsprogrammcode zugeordnete Segment 46 im nichtflüchtigen Speicher 34. Diejenigen Seiten 36 des Anwendungsprogrammcodes 50 im nichtflüchtigen Speicher 32, auf die häufig zugegriffen wird, werden hierzu, wie durch den Pfeil angedeutet, in dem als Puffer dienenden Segment 42 im flüchtigen Speicher 34 nachgebildet. Änderungen in den nachgebildeten Seiten werden dann zunächst nur im Pufferspeichersegment 42 vorgenommen. Regelmäßig wird der Inhalt des Pufferspeichers 42 auf die entsprechenden Seiten 36 im nichtflüchtigen Speicher 32 übertragen.

Die Kommandoverarbeitung ist abgeschlossen, wenn ein Antwortdatensatz vorliegt, Schritt 110. Sowie dies der Fall ist, stoppt der Prozessor 12 den Timer 22, Schritt 112, und ermittelt die seit dem Start abgelaufene Zeit T. Den ermittelten Wert für T vergleicht er mit dem in Schritt 102 ausgelesenen Referenzwert T_{R}, Schritt 114.

Ergibt der Vergleich, daß der ermittelte Wert T kleiner ist als der Referenzwert T_{R}, prüft der Prozessor 12, ob eine Vergrößerung des als Maß für die Größe des Segmentes 42 dienenden Wertes Z möglich ist und vergrößert gegebenenfalls den Wert Z. Den neuen Wert für Z speichert der Prozessor 12 im nichtflüchtigen Speicher 32. Desweiteren speichert der Prozessor 12 den Wert T als neuen Wert für To. Ist eine Vergrößerung des Wertes Z nicht möglich, beläßt der Prozessor 12 den Wert Z unverändert.

Ergibt der Vergleich in Schritt 114, daß der ermittelte Wert T größer oder gleich dem Referenzwert T_{R} ist, prüft der Prozessor 12 anhand vorhergehender Werte Tv für T, ob der Wert T_{R} ein Minimum bildet, Schritt 120. Trifft das zu, beläßt der Prozessor 12 den Wert für Z sowie den Referenzwert T_{R} unverändert.

Stellt der Prozessor 12 fest, daß der ermittelte Wert T und der Referenzwert T_{R} übereinstimmen und T_{R} kein Minimum bildet, verkleinert der Prozessor 12 den Wert Z und speichert den verkleinerten Wert im nichtflüchtigen Speicher 32. Desweiteren speichert der Prozessor 12 den Wert T als neuen Wert für T_{R}.

Nachfolgend übermittelt der Prozessor 12 den Antwortdatensatz 110 über die Schnittstelle 16 an das externe Terminal und leert, soweit dies noch nicht erfolgt ist, abschließend die Segmente 42 und 46 im flüchtigen Speicher 34.

Danach erwartet der Prozessor 12 das nächste Kommando und führt anschließend die Schritte 100 fortfolgend erneut aus. Dabei kann eine Unterscheidung nach Kommandos vorgesehen sein, wobei unterschiedlichen Kommandos jeweils unterschiedliche Wert für Z und T_{R} zugeordnet sind. Wurde eine Kommando häufig genug verarbeitet, stellen sich für Z und T_{R} diejenigen Werte ein, bei denen eine größtmögliche Ausführungsgeschwindigkeit erzielt wird.

Unter Beibehaltung der Grundidee, bei der Kommandoausführung einen Wert für die zur Verarbeitung benötigte Zeit zu erfassen, um über das Meßergebnis eine optimale Zuteilung von Speicherplatz im flüchtigen Speicher zu erreichen, gestattet die Erfindung eine Vielzahl von Ausgestaltungen. Beispielsweise kann sich die Zeiterfassung nur über einen Teil der im Rahmen einer Kommandoverarbeitung durchgeführten Operationen erstrecken oder mehrere Kommandos erfassen. Die Auswertung nach Schritt 114 kann komplexer sein und insbesondere eine Vielzahl von Randbedingungen berücksichtigen. Die Konfigurationsinformation kann bei gleichem Informationsgehalt auf andere Weise dargestellt und gespeichert sein, beispielsweise als zunächst aufzulösende Verknüpfung mit anderen Informationen. Die zur Realisierung eingesetzten Komponenten, insbesondere die Prozessoreinheit 12 und der Speicher 14 können mit weiteren Komponenten verbunden oder in diese integriert sein.

## Patentansprüche

1. Verfahren zur Speicherverwaltung bei der Ausführung einer Anwendung durch einen ressourcenbeschränkten, tragbaren Datenträger, insbesondere einer Chipkarte, wobei die Anwendungsausführung erfolgt, indem der tragbare Datenträger Kommandos erhält, die er verarbeitet um jeweils einen Antwortdatensatz zu erzeugen, **gekennzeichnet durch** folgende Schritte:
- Bereitstellen (104) eines Pufferspeicherbereiches (42) gemäß einem Größenwert (Z) bei Verarbeitung eines Kommandos im flüchtigen Speicher (34), wobei der Größenwert (Z) in einem Konfigurationsbereich (38) im nichtflüchtigen Speicher (32) abgespeichert ist,
- Ermitteln der für die Verarbeitung eines Kommandos benötigten Zeit (T) und
- Verkleinern des Größenwertes (Z), wenn der für die Zeit ermittelte Wert (T) einem Referenzwert (T_{R}) entspricht und Vergrößern, wenn der Zeitwert (T) größer ist als der Referenzwert (T_{R}).

2. Verfahren nach Anspruch 1, **dadurch gekennzeichnet, daß** zur Ermittlung der Zeit (T) nach Eingang eines Kommandos in der Prozessoreinheit (12) ein Timer (22) gestartet (106) und nach Ermittlung des Antwortdatensatzes (110) wieder gestoppt wird.

3. Verfahren nach Anspruch 1, **dadurch gekennzeichnet, daß** der Größenwert (Z) unverändert belassen wird, wenn die Zeit (T) dem Referenzwert (T_{R}) entspricht und dieser ein Minimum verglichen mit bei vorhergehenden Kommandoverarbeitungen gemessenen Zeiten (Tv) bildet.

4. Speicherverwaltung für einen tragbaren Datenträger, welche eine Prozessoreinheit (12) sowie eine Speicheranordnung (14) mit zumindest einem nichtflüchtigen Speicher (32) sowie einem flüchtigen Speicher (34) aufweist, **dadurch gekennzeichnet, daß** sie weiter einen Timer (22) umfaßt zur Messung des Zeitbedarfs (T) für die Verarbeitung eines Kommandos, und sie weiterhin dazu eingerichtet ist, die Größe (Z) des für die Verarbeitung eines Kommandos zur Verfügung gestellten Speicherplatzes (42) im flüchtigen Speicher (34) in Abhängigkeit von dem gemessenen Zeitbedarf (T) einzustellen.
